# EUROPEAN PATENT APPLICATION

(11) **EP 1 575 313 A1**
(43) Date of publication of application: **14.09.2005**
(21) Application number: 05250715.9
(22) Date of filing: 08.02.2005
(51) Int. Cl.: H04Q 7/22

(54) **System and method for sms message filtering**

(30) Priority: 19.02.2004 US 782692
(71) Applicant: LUCENT TECHNOLOGIES INC., Murray Hill, New Jersey 07974-0636 (US)
(72) Inventor: Benco, David S., Winfield, IL 60190 (US); Lewandowski Barclay, Deborah, Winfield, Il 60190 (US); Mahajan, Sanjeev, Naperville, IL 60565 (US); McRoberts, Thomas Lee, Naperville, IL 60540 (US); Ruggerio, Raymond Leroy, Glenview, IL 60025 (US)
(74) Representative: Watts, Christopher Malcolm Kelway

(57) **Abstract**

A system and method of filtering SMS messages sent from an originating terminal to a subscriber terminal over a wireless communications network is provided. The method includes providing subscriber-provided authorization criteria, determining authorization of the originating terminal for sending the SMS message to the subscriber terminal using the authorization criteria, and filtering the SMS message based on the determining step. The system includes means for providing subscriber-provided authorization criteria, means for determining authorization of the originating terminal, and means for filtering the SMS message based on the authorization of the originating terminal.

## Description

### BACKGROUND OF THE INVENTION

This invention relates to the art of telecommunications and more particularly to a system and method for filtering SMS messages sent to a mobile terminal using subscriber-provided authorization criteria.

Short Message Service (SMS) is a widely accepted wireless communications service that enables the transmission of alphanumeric messages between wireless mobile terminals. SMS is characterized by out-of-band packet delivery and low-bandwidth message transfer, which results in a highly efficient means for transmitting short bursts of data. A wide variety of uses of SMS messaging has evolved beyond simple short message exchanges between two parties.

The popularity of SMS messages has lead to the proliferation of this form of communication and the widespread use of SMS capable mobile terminals. The ability to reach consumers using SMS messaging has not been lost on advertisers and telemarketers who have recently dramatically increased the number of unsolicited messages sent to wireless subscribers. As a result, mobile users often receive unwanted SMS messages.

Mobile users typically subscribe to service plans offered by wireless communications service providers, also known as network providers. These subscribers often pay for the minutes they use their mobile terminal, with prime-time minutes commanding a premium. Due to the limited RF spectrum available, service providers frequently charge the wireless subscriber for incoming calls. Since SMS messages use the service provider's limited RF resources, subscribers are usually also charged for time spent receiving incoming SMS messages.

Therefore, subscribers are receiving more and more unwanted SMS messages which they must ultimately pay for. Additionally, receiving unwanted SMS messages can be an annoyance and distraction. Subscribes typically want to keep their mobile terminals on in order to receive wanted calls but they do not want to be disturbed by receiving unwanted SMS messages.

It is therefore desirable to enable a subscriber to block unwanted SMS messages.

### SUMMARY OF THE INVENTION

A system and method of filtering SMS messages sent from an originating terminal to a subscriber terminal over a wireless communications network is provided.

In accordance with a first aspect of the invention, a method of filtering an SMS message includes providing subscriber-provided authorization criteria, determining authorization of the originating terminal for sending the SMS message to the subscriber terminal using the authorization criteria, and filtering the SMS message based on the determining step.

In accordance with a second aspect of the invention, the filtering step includes delivering the SMS message to the subscriber terminal when the originating terminal is authorized to send SMS messages to the subscriber terminal.

In accordance with a third aspect of the invention, the filtering step includes blocking the SMS message to the subscriber terminal when the originating terminal is not authorized to send SMS messages to the subscriber terminal.

A system for filtering SMS messages sent from an originating terminal to a subscriber terminal over a wireless communications network includes means for providing subscriber-provided authorization criteria, means for determining authorization of the originating terminal for sending the SMS message to the subscriber terminal using the authorization criteria, and means for filtering the SMS message based on the authorization of the originating terminal.

In accordance with yet another aspect of the invention the means for filtering the SMS message includes means for delivering the SMS message to the subscriber terminal when the originating terminal is authorized to send SMS messages to the subscriber terminal.

In accordance with another aspect of the invention the means for filtering the SMS message includes means for blocking the SMS message thereby preventing delivery of the SMS message to the subscriber terminal when the originating terminal is not authorized to send SMS messages to the subscriber terminal.

Further scope of the applicability of the present invention will become apparent from the detailed description provided below. It should be understood, however, that the detailed description and specific examples, while indicating preferred embodiments of the invention, are given by way of illustration only, since various changes and modifications within the spirit and scope of the invention will become apparent to those skilled in the art.

### DESCRIPTION OF THE DRAWINGS

The present invention exists in the construction, arrangement, and combination of the various parts of the device, and steps of the method, whereby the objects contemplated are attained as hereinafter more fully set forth, specifically pointed out in the claims, and illustrated in the accompanying drawings in which:
Fig. 1 is a block diagram illustrating a portion of a wireless communications network in accordance with the invention;
Fig. 2 is a flow chart illustrating the invention;
Fig. 3 is a block diagram illustrating the subscriber providing subscriber-provided authorization criteria in accordance with the invention;
Fig. 4 is a message flow illustrating the step of providing subscriber-provided authorization criteria as shown in Fig. 3 in accordance with the invention;
Fig. 5 is a block diagram illustrating the subscriber providing subscriber-provided authorization criteria in accordance with the invention;
Fig. 6 is a message flow illustrating the step of providing subscriber-provided authorization criteria as shown in Fig. 5 in accordance with the invention;
Fig. 7 is a message flow illustrating the filtering of an SMS message from an authorized originating terminal in accordance with the invention; and
Fig. 8 is a message flow illustrating the filtering of an SMS message from an unauthorized originating terminal in accordance with the invention.

### DETAILED DESCRIPTION OF THE PREFERRED EMBODIMENTS

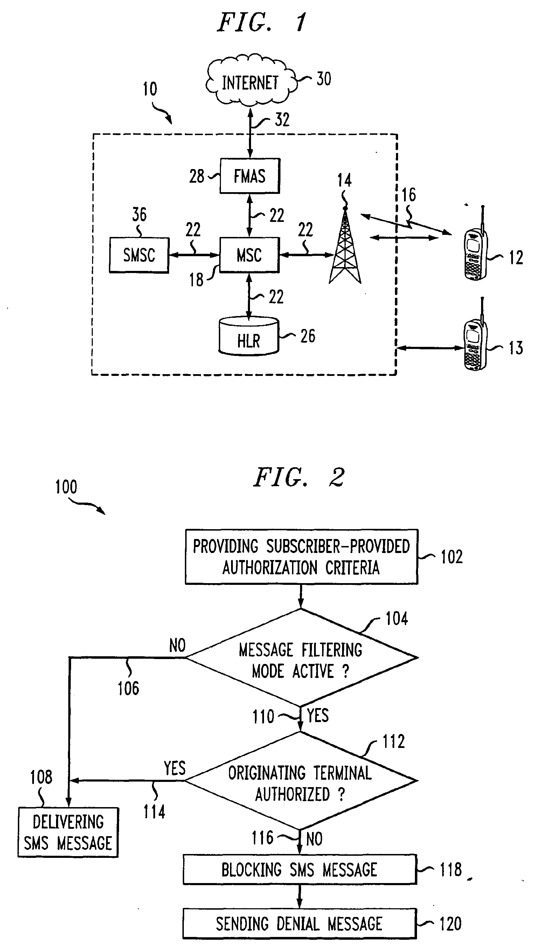

Referring to Fig. 1 a block diagram of a portion of a wireless communications network shown generally at 10. The wireless communications network 10 can be any suitable known wireless communications network including but not limited to CDMA, GSM, TDMA, etc.

A wireless communications service provider provides the services of the wireless communications network 10 to subscribers. A subscriber can communicate over the wireless communications network 10 using a wireless communications terminal, also known as a cellular terminal, or a mobile terminal 12. The mobile terminal, also referred to as the subscriber terminal 12, is capable of receiving SMS messages from an Originating Terminal 13 over the wireless communications network 10. Examples of the mobile terminal 12 can include, but are not limited to, CDMA, GSM, or any other wireless devices. The originating terminal 13 can be any terminal capable of sending SMS messages to the subscriber terminal 12 over the wireless communications network 10.

The wireless communications network 10 includes base stations, only one of which is shown for the purposes of simplicity at 14, communicating with the mobile terminal 12 over air an interface 16. The air interface 16 is defined in each one of the different wireless technologies, such as GSM and CDMA. These technologies include standards specifying how the voice and data signals, such as SMS messages, are transferred from the MSC 18 to the terminal 12 and back, as well as the utilization of transmission of electromagnetic radio signal frequencies, considering the available bandwidth and the system's capacity constraints. The network 10 includes a plurality of base stations, also known as cell sites, or cells which are distributed across the geographic area over which the network provides communications coverage.

The wireless communications network 10 also includes a Mobile Switching Center (MSC) 18 communicating with the base station 14 using a known connection 20. In the preferred embodiment, the MSC 18 is a processor-based apparatus with data link interfaces for coupling together other portions of the wireless communications network 10. The MSC 18 handles the communications of the mobile terminal 12 with the communications network 10 including call set-ups, registration and routing incoming calls to the mobile terminal. The MSC 18 performs the switching functions of the system and controls the terminal's 12 call delivery to and from other telephone and data systems, including the terminal 13. The MSC 18 delivers the SMS message to the receiving mobile terminal through the proper base station 14 based on the location of the terminal. The wireless network 10 can include a plurality of MSCs and the MSC indicated at 18 can be the mobile terminal's home MSC, or it can be a different MSC in the wireless communications network 10, often referred to the serving MSC, if the mobile terminal 12 is roaming.

The wireless communications network 10 also includes a Home Location Register (HLR) 26 connected to the MSC 18 via the service provider network connection 22. The HLR 26 can store subscriber profile information such as user identification, user security information, including network access control information for authentication and authorization, user location information for user registration, etc. The HLR 26 provides call and SMS message routing information for the indicated subscriber. The subscriber profile information can be copied to a Visitor Location Register (not shown) stored separately and at a different location from the HLR 26 when the subscriber terminal 12 is roaming. For the purposes simplification, the HLR 26 shall be used in the examples provided herein, although it should be appreciated that a VLR could be used in place of the HLR.

The subscriber profile information is also used for identifying the services network subscribers subscribe to, such as the ability to send and receive SMS messages and filter SMS messages via a Filter Mode as described below. The HLR 26 subscriber profile information is used to store subscriber-provided authorization criteria used for filtering the SMS messages.

The wireless communications network 10 includes a Filter Mode Application Server (FMAS) 28 connected to the MSC 18 via the Service Provider network connection 22. The FMAS 28 provides command and control of a Filter Mode application for enabling subscribers to filter SMS messages sent from an originating terminal 13 to the subscriber terminal 12. The Filter Mode can be available to all mobile terminals capable of receiving SMS messages or it can be available as a subscription feature at an extra cost. The FMAS 28 provides an interface to subscribers to enable them to provide subscriber-provided authorization criteria used to filter SMS messages sent to their subscriber terminal 12. The FMAS 28 can be connect to the Internet 30 via an Internet connection 32 to enable the subscriber to provide subscriber-provided authorization criteria over the Internet. The FMAS 28 can be a separate network element or it can be integrated into the MSC18.

The wireless communications network 10 also includes an Short Message Service Center (SMSC) 36 connected to the MSC 18 using a known network connection 22. The SMSC 36 provides a mechanism for transmitting SMS messages to and from mobile devices including the subscriber terminal 12 via home/serving MSC 18. The SMSC 36 acts as a store-and-forward system for SMS messages, providing the mechanisms required to find the subscriber terminal MSC 18 for transport of SMS messages therebetween.

SMS makes use of the mobile application part (MAP), which defines the methods and mechanisms of communication in wireless networks and employs the services of the SS7 transactional capabilities application part (TCAP). The capabilities of the subscriber terminal 12 can vary depending on the wireless technology supported by the terminal. The MAP layer defines the operations necessary to support SMS. Both American and international standards bodies have defined a MAP layer using the services of the SS7 TCAP. The American standard is published by Telecommunication Industry Association and is referred to as IS-41. The international standard is defined by the European Telecommunications Standards Institute (ETSI) and is referred to as GSM MAP.

SMS includes Mobile-originated (MO) short messages transported from a MO-capable terminal to the SMSC and can be destined to other mobile subscribers or for subscribers on fixed networks such as paging networks or Internet protocol (IP) networks (including the Internet and private e-mail networks). SMS also includes Mobile-terminated (MT) short messages transported from the SMSC to the terminal and can be submitted to the SMSC by other mobile subscribers via MO-SM or by other sources such as voice-mail systems, paging networks, or operators.
The originating terminal 13 can be any terminal capable of sending SMS messages to the subscriber terminal 12 over the wireless communications network 10. The originating terminal 13 can be a mobile terminal, a terminal communicating with the wireless network via the PSTN, or a terminal communicating with the wireless network via the Internet.

The invention uses authorization criteria for filtering the SMS messages in a Filtering Mode. The SMS message filtering can include allowing delivery of SMS messages to the subscriber terminal 12 sent from authorized originating terminals 13 and/or blocking the messages from reaching the subscriber terminal sent from terminals that are not authorized. The authorization criteria is provided by the subscriber and is therefore referred to as subscriber-provided authorization criteria. The invention enables the subscriber to determine which originating terminals are authorized and which originating terminals are not authorized.

Referring now to Fig. 2, a method of filtering SMS messages in a wireless communications network 10 is shown generally at 100. The method includes providing subscriber-provided authorization criteria at 102 for filtering SMS messages sent from the originating terminal 13 to the subscriber terminal 12. The authorization criteria can be any criteria identifying originating terminals, such as an Originating Terminal Identifier Authorization Criteria (OTIDAC). The OTIDAC can be the phone number of the originating terminal, or the IP address of the originating terminal. The authorization criteria can be OTIDACs of authorized terminals. Alternatively, the authorization criteria can be OTIDACs of unauthorized terminals, in which case the OTID of the terminal sending the SMS message must not match authorization criteria OTIDAC in order for the SMS message to be delivered to the subscriber terminal 12. The authorization criteria OTIDAC is stored on the HLR 26 for use in Filtering the SMS messages as described below.

The method 100 also includes determining that the SMS message Filtering Mode is active for a mobile terminal 12 at 104. If the Filtering Mode is not active (see 106), the SMS message is delivered to the mobile terminal 12 at 108. If the Filtering Mode is active (see 110), the method 100 also includes determining that the originating terminal 13 is authorized to send SMS messages to the mobile terminal 12 at 112 using the subscriber-provided authorization criteria. If the originating terminal is authorized (see 114), the SMS message is delivered to the mobile terminal 12 at 108. If the originating terminal 13 is not authorized to send SMS messages to the mobile terminal 12 at 112 (see 116), the SMS message is blocked at 118. The method 100 can also include sending a denial message to the originating terminal 13 indicating that the originating terminal is not authorized to send SMS messages to the mobile terminal at 120.

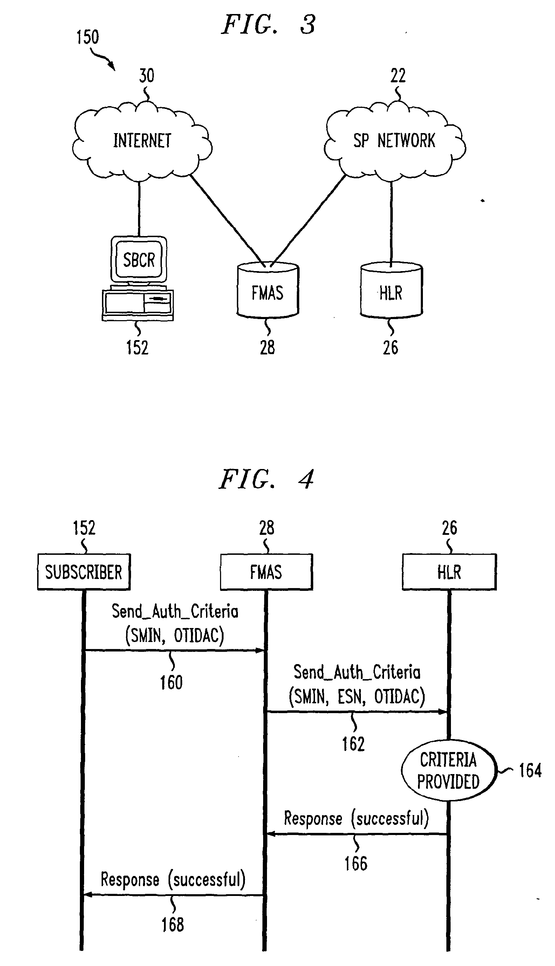

The subscriber can use the Internet 30 to provide the subscriber-provided authorization criteria at 102 to the wireless network 10 as shown generally at 150 in Fig. 3. The subscriber uses any known electronic device capable of sending command messages over the Internet, such as a computer 152, connected to the FMAS 28 via the internet 30. As described above, the FMAS 28 is connected to the HLR 26 via the service provider network 22.

Referring to Fig. 4, a message flow is shown illustrating the subscriber providing authorization criteria over the Internet. The message flow is provided for the purposes of example and should therefore, not be considered as limiting the scope of the invention. The subscriber logs on to the service provider webpage entering a password, Personal Identification Number (PIN), etc. which then associates the subscriber generated command messages with the subscriber terminal 12, such as for example by including the Subscriber terminal's Mobile Identity Number (SMIN). The subscriber can send the authorization criteria, such as the OTID, to the FMAS 28 by sending a Send_Auth_Criteria command message to the FMAS 28 at 160. The Send_Auth_Criteria command message is used herein for the purposes of example only and should not be considered limiting as any suitable command message using any messaging protocol capable of transferring subscriber-provided authorization criteria to the FMAS 28 over the Internet can be used. The FMAS 26 sends the Send_Auth_Criteria command message to the HLR 26 at 162 over the service provider network connection 22. The FMAS 28 can send the subscriber terminal's Electronic Serial Number (ESN) as well as the SMIN and OTID.

In applications wherein the Filter Mode feature is provided on a subscription basis, the HLR 26 can verify whether the subscriber subscribes to the Filter Mode feature and is therefore authorized to provide filtering criteria by checking the subscriber profile information. Upon verification of subscriber identity and, if needed, subscription requirements, the subscriber-provided authorization criteria is stored at the HLR 26 at 164. The HLR 26 sends a response at 166 to the FMAS 28 over the service provider network connection 28 notifying that the authorization criteria has been provided. The FMAS 28 sends a response over the Internet 30 to the subscriber at 168 indicating that the subscriber-provided authorization criteria has been received.

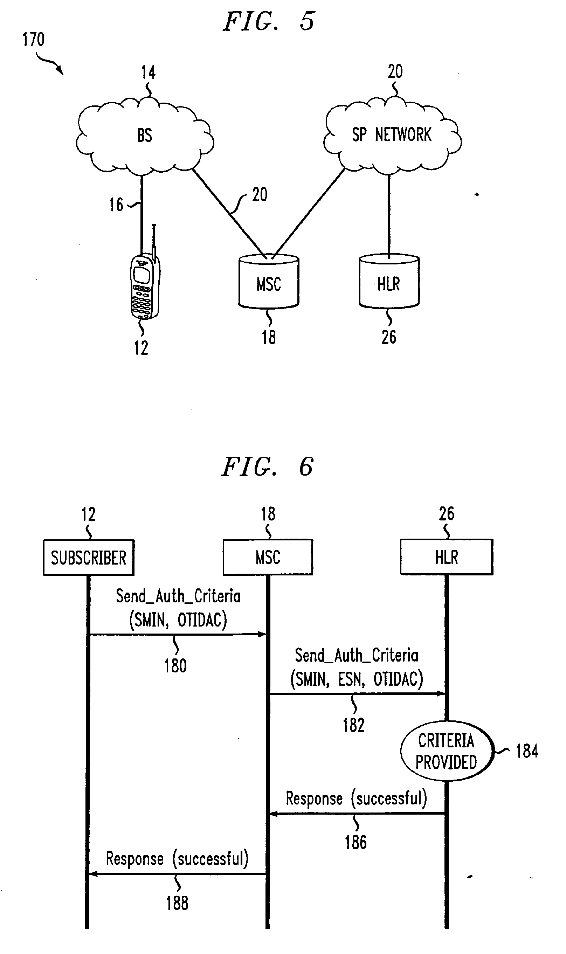

The subscriber can provide the subscriber-provided authorization criteria to the network 10 at 102 using a mobile terminal such as the subscriber terminal 12 as shown generally at 170 in Fig. 5. The subscriber uses any known mobile terminal suitable for sending command messages over an air interface 14 to the MSC 18. The subscriber can enter information using a menu driven user interface or in any other suitable manner.

As shown in Fig. 6, a message flow illustrating the subscriber providing authorization criteria using a mobile terminal. The message flow is provided for the purposes of example and should therefore, not be considered as limiting the scope of the invention. The subscriber sends an Send_Auth_Criteria command including the authorization criteria, such as the OTID, to the MSC 18 at 180. The Send_Auth_Criteria command is associated with the subscriber terminal 12 in any suitable manner, such as including the SMIN, when the subscriber enters a password, Personal Identification Number (PIN), etc. or if the subscriber uses the subscriber terminal 12 to send the command message. The MSC 18 sends the Send_Auth_Criteria command message to the HLR 26 at 182 over the service provider network connection 22. The FMAS 28 can include the subscriber terminal's Electronic Serial Number (ESN) as well as the SMIN and OTID.

The HLR 26 can verify the subscriber information as described above and upon verification, the store subscriber-provided authorization criteria at 184. The HLR 26 sends a response at 186 to the MSC 18 over the service provider network connection 22, notifying that the authorization criteria has been provided which is sent to the subscriber at 188.

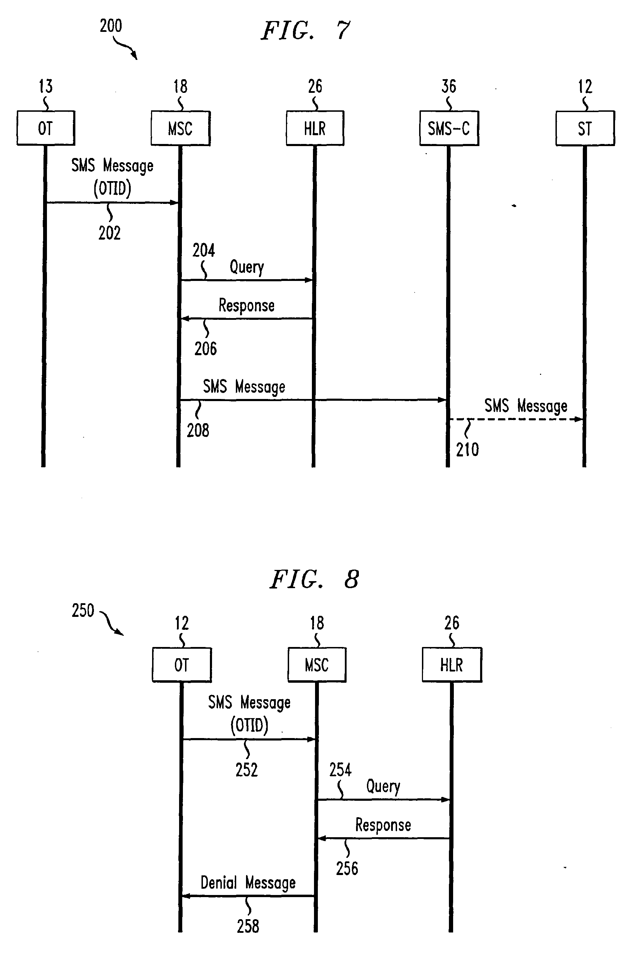

Referring to Fig. 7, a message flow illustrating the SMS message Filtering Mode for an originating terminal 13 authorized for sending an SMS message to the subscriber terminal 12 in accordance with the invention is shown generally at 200. The message flow 200 is provided for the purposes of example and should therefore not be considered as limiting the scope of the invention. The originating terminal 13 sends the SMS message to the MSC 18 at 202 over the wireless network 10. The MSC 18 queries the HLR 26 subscriber profile information to verify that the subscriber terminal 12 can receive SMS messages. The HLR 18 determines whether SMS Filtering Mode is active for the subscriber terminal 12 at 104. If Filtering Mode is active, the HLR 18 also determines authorization of the originating terminal 13 for sending the SMS message to the subscriber terminal 12 using the subscriber-provided authorization criteria. For example, the HLR compares the OTID passed with the SMS message at 202 with the stored subscriber-provided authorization criteria terminal identifiers OTIDC. The HLR sends a response back to the MSC at 206 indicating that the originating terminal is authorized and providing routing information for sending the SMS message to the subscriber terminal 12. Since the originating terminal 13 is authorized, the filtering step proceeds with delivering of the SMS message to the subscriber terminal 12. The MSC 18 sends the SMS message to the SMS Center 36 at 208 and the SMSC 36 sends the SMS message to the subscriber terminal at 210.

Referring to Fig. 8, a message flow illustrating the SMS message Filtering Mode for an unauthorized originating terminal 13 sending an SMS message to the subscriber terminal 12 in accordance with the invention is shown generally at 250. The message flow 250 is provided for the purposes of example and should therefore not be considered as limiting the scope of the invention. The originating terminal 13 sends the SMS message to the MSC 18 at 252 over the wireless network 10. The MSC 18 queries the HLR 26 at 254 which checks the subscriber profile information to verify that the subscriber terminal 12 can receive SMS messages. The HLR 26 determines whether SMS Filtering Mode is active for the subscriber terminal 12 at 104 above. If Filtering Mode is active, the HLR 26 also determines authorization of the originating terminal 13 for sending the SMS message to the subscriber terminal 12 using the subscriber-provided authorization criteria as described above. In this example, the originating terminal 13 is not authorized to send SMS messages to the subscriber terminal 12 and the HLR 26 sends a response back to the MSC at 256 indicating such. Since the originating terminal 13 is not authorized to send SMS messages to the subscriber terminal, the filtering step includes blocking the SMS message. The MSC does not send the SMS message on, thereby preventing the delivery of the SMS message to the subscriber terminal 12. The MSC 18 and/or the SMSC 36 can send a denial message back to the originating terminal 13 at 258 indicating that the SMS message was not sent to the subscriber terminal. The denial message can be an SMS message.

It is also to be appreciated that particular elements or components described herein may have their functionality suitably implemented via hardware, software, firmware or a combination thereof. Additionally, it is to be appreciated that certain elements described herein as incorporated together may under suitable circumstances be stand alone elements or otherwise divided. Similarly a plurality of particular functions described as being carried out by one particular element may be carried out by a plurality of distinct elements acting independently to carry out individual functions, or certain individual functions may be split-up and carried out by a plurality of distinct elements acting in concert. Alternately, some elements or components otherwise described and/or shown herein as distinct from one another may be physically or functionally combined where appropriate.

The above description merely provides a disclosure of particular embodiments of the invention and is not intended for the purposes of limiting the same thereto. As such, the invention is not limited to only the above-described embodiments. Rather, it is recognized that one skilled in the art could conceive alternative embodiments that fall within the scope of the invention.

## Claims

1. A method of filtering an SMS message sent from an originating terminal to a subscriber terminal in a wireless communications network comprising:
providing subscriber-provided authorization criteria;
determining authorization of the originating terminal for sending the SMS message to the subscriber terminal using the authorization criteria; and
filtering the SMS message based on the determining step.

2. The method defined in claim 1 wherein the determining step comprises determining the originating terminal is not authorized for sending an SMS message to the subscriber terminal.

3. The method defined in claim 2 wherein the filtering step includes blocking the SMS message thereby preventing delivery of the SMS message to the subscriber terminal.

4. The method defined in claim 1 wherein the determining step comprises determining the originating terminal is authorized for sending an SMS message to the subscriber terminal.

5. The method defined in claim 4 wherein the filtering step includes delivering the SMS message to the subscriber terminal.

6. The method defined in claim 1 wherein the subscriber provisioned authorization criteria includes terminal identifiers and the determining step further comprises:
comparing a terminal identifier identifying the originating terminal with the subscriber-provided authorization criteria.

7. The method defined in claim 1 wherein the authorization çriteria is a terminal identifier.

8. A system for filtering an SMS message sent from an originating terminal to a subscriber terminal in a wireless communications network comprising:
means for providing subscriber-provided authorization criteria;
means for determining authorization of the originating terminal for sending the SMS message to the subscriber terminal using the authorization criteria; and
means for filtering the SMS message based on the authorization of the originating terminal.

9. The system defined in claim 8 wherein means for filtering comprises
means for delivering the SMS message to the subscriber terminal when the originating terminal is authorized to send SMS messages to the subscriber terminal.

10. The system defined in claim 8 wherein means for filtering comprises
means for blocking delivery of the SMS message to the subscriber terminal when the originating terminal is not authorized to send SMS messages to the subscriber terminal. ,
